**Europäisches Patentamt**

(19) **European Patent Office**

**Office européen des brevets**

(11) Veröffentlichungsnummer: **0 178 584**
**B1**

(12) **EUROPÄISCHE PATENTSCHRIFT**

(45) Veröffentlichungstag der Patentschrift:
**10.05.89**

(21) Anmeldenummer: **85112815.7**

(22) Anmeldetag: **10.10.85**

(51) Int. Cl.⁴: **B01D 33/26**

(54) **Anlage zur mechanischen Reinigung von Abwasser.**

(30) Priorität: **18.10.84 DE 3438170**

(43) Veröffentlichungstag der Anmeldung:
**23.04.86 Patentblatt 86/17**

(45) Bekanntmachung des Hinweises auf die Patenterteilung:
**10.05.89 Patentblatt 89/19**

(84) Benannte Vertragsstaaten:
**AT BE CH DE FR GB IT LI LU NL SE**

(56) Entgegenhaltungen:
**DE-A- 2 505 565**
**DE-B- 2 261 203**
**GB-A- 1 471 153**
**US-A- 2 022 069**

(73) Patentinhaber: **MECAPEC S.A., Oberseestrasse,**
**CH-8716 Schmerikon/SG(CH)**

(72) Erfinder: **Fuchs, Ernst, Oberseestrasse,**
**CH-8716 Schmerikon(CH)**
Erfinder: **Fitzi, Karl, Blumenbergstrasse 22,**
**CH-8634 Hombrechtikon(CH)**

(74) Vertreter: **Vièl, Georg, Dipl.-Ing., Am Zimmerplatz 16,**
**D-6606 Saarbrücken-Gersweiler(DE)**

ACTORUM AG

**Beschreibung**

Die Erfindung betrifft eine Vorrichtung zur mechanischen Reinigung biologisch behandelten Abwassers, die ein antreibbares Trommelfilter mit scheibenartigen Kammern enthält, welche an der Seite je zwei Filterflächen auf ein Traggerüst aufweisen, wobei außerhalb der Kammern dicht an die Filterflächen zwei Absaugvorrichtungen zur Reinigung der Filterschicht angreifen.

Aus der DE-PS 2 261 203 ist eine solche Vorrichtung bekannt. Die Reinigung der Filtermaterialbahn gemäß dieser Druckschrift ist für manche Anwendungen nicht ausreichend.

Zur Intensivierung der Reinigung der Filtermaterialbahn ist es auch bekannt, letztere einem Spülvorgang zu unterwerfen: von der Filterrückseite wird Wasser aufgespritzt, während auf der Vorderseite der Filtermaterialbahn das Wasser abgepumpt wird.

Der Erfindung liegt die Aufgabe zugrunde, bei einer mit einem Trommelfilter arbeitenden Vorrichtung zur mechanischen Reinigung von Abwasser eine verbesserte Reinigung zu ermöglichen.

Diese Aufgabe wird erfindungsgemäß dadurch gelöst, daß die Kammern auf einem feststehenden Tragrohr drehbar gelagert sind und daß im Innern der Kammern zwei feststehende, den Absaugvorrichtungen zugeordnete, mit Wasser beaufschlagbare Anspritzvorrichtungen angeordnet sind.

Nach einer weiteren Ausbildung der Erfindung ist vorgesehen, daß die Anspritzvorrichtungen über Leitungen mit Wasser versorgt sind, die im Innern des Tragrohrs verlegt sind.

Eine andere Ausbildung der Erfindung besteht darin, daß die Versorgungsleitungen der Anspritzvorrichtungen über ein revolverartiges System eines Verteilbocks mit der Wasserzufuhr und daß die Absaugleitungen über ein zweites revolverartiges System mit der Schmutzwasserleitung koppelbar sind.

Erfindungsgemäß ist auch vorgesehen, daß die Filterflächen der scheibenartigen Kammern in einzelne Sektoren aufgeteilt sind.

Dabei ist es zweckmäßig, wenn die sektorenartigen, die Filterfläche bildenden Elemente auf dem Tragrohr in Nuten stecken, an Stegen befestigt und mit einer klammerartigen Umfassung versehen sind.

Die mit der Erfindung erzielten Vorteile bestehen insbesondere darin, daß ein Trommelfilter mit großer Filterfläche sehr gut zu reinigen ist und eine einfache, störungsunanfällige Abwasser-Reinigungsanlage geschaffen worden ist. Außerdem ist eine Modulbauweise leicht zu verwirklichen, indem je nach Bedarf eine gewünschte Anzahl von scheibenförmigen Kammern, d.h. die Größe der Filterfläche, gewählt werden kann.

Die Erfindung wird anhand der Zeichnungen näher beschrieben.

Es zeigen

Fig. 1 und Fig. 2 schematisch eine Vorrichtung zur Reinigung von Abwasser mit einem scheibenartige Kammern aufweisenden Trommelfilter in zwei Ansichten,

Fig. 3 Einzelheiten der scheibenartigen Kammern mit Anspritz- und Absaugvorrichtungen und

Fig. 4 einen Verteilblock für Wasser-Zu- und Abfluß.

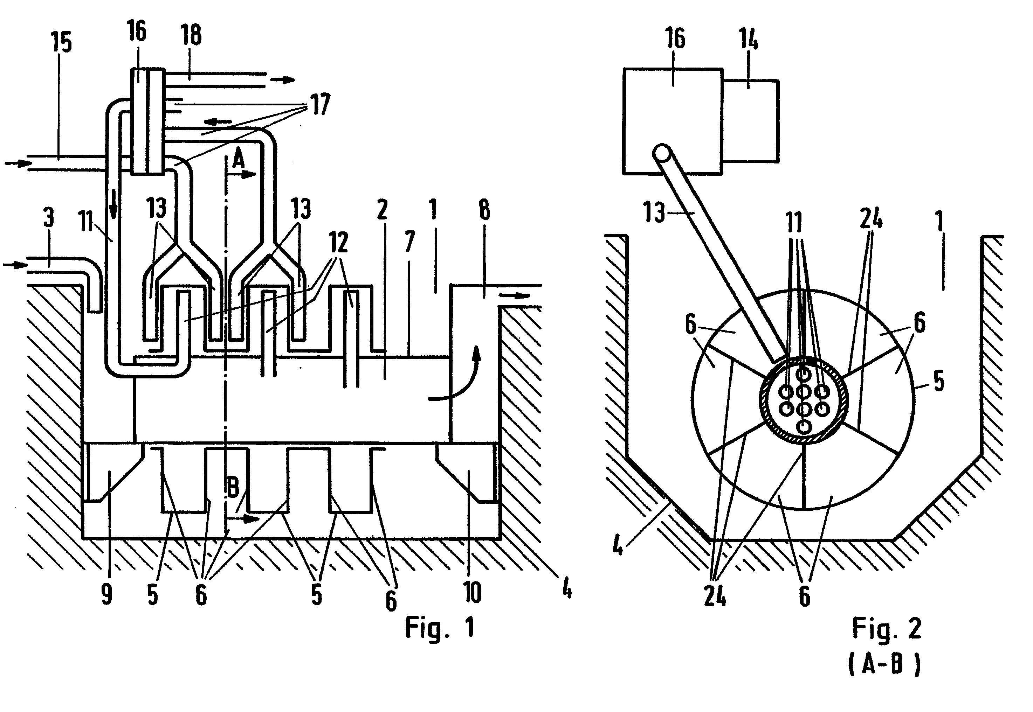

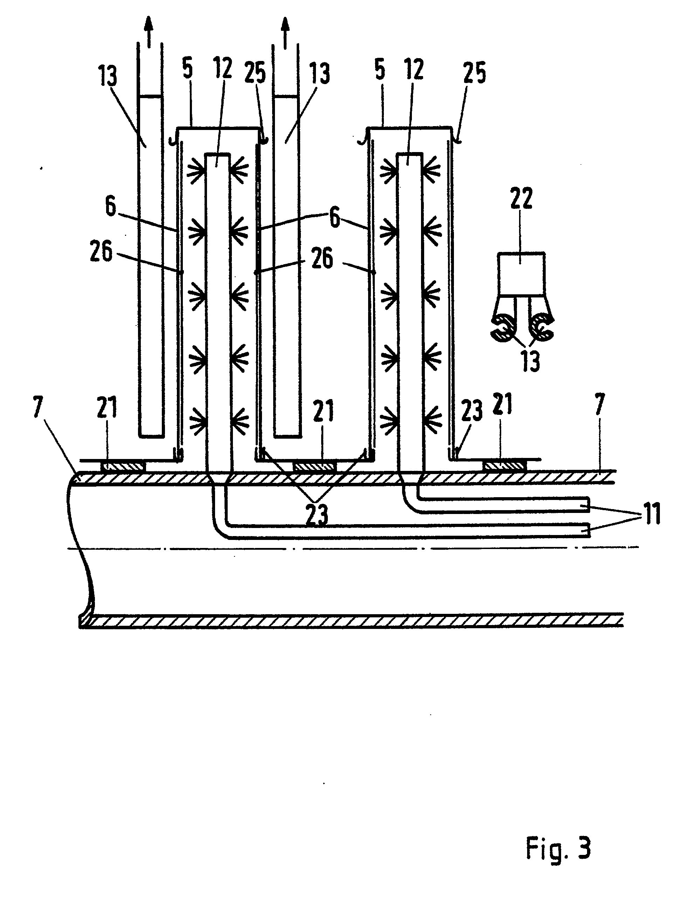

Fig. 1 und 2 zeigen eine Vorrichtung 1 zum mechanischen Reinigen von Abwasser, was üblicherweise zuerst biologisch behandelt (nicht dargestellt) und abschließend mit z.B. einem Trommelfilter 2 mechanisch gereinigt wird. Das vorbehandelte Abwasser gelangt über ein Rohr 3 in das Becken 4, passiert die seitlich an den scheibenförmigen Kammern 5 angebrachten Filterflächen 6 und fließt gereinigt durch das feststehende Tragrohr 7 und die Ableitung 8 ab.

Im Gegensatz zu bekannten Trommelfiltern ist das erfindungsgemäße Trommelfilter 2 nicht als ganze Einheit drehbar ausgebildet, sondern das Tragrohr 7 ruht fest auf zwei Konsolen 9 und 10, und die scheibenartigen Kammern 5 sind auf dem Tragrohr 7 drehbar gelagert (der Antrieb ist nicht dargestellt). Dadurch ergibt sich ein Trommelfilter 2, das eine große Filterfläche hat und bei dem die bewegte (rotierende) Masse klein ist.

Je nach gewünschter Filterfläche wird die Länge des Tragrohrs 7 und die Anzahl der auf diesem drehbar gelagerten scheibenförmigen Kammern 5 mit den seitlichen Filterflächen 6 festgelegt. Die Vorrichtung gemäß der Erfindung kann demnach einfach an die durchzusetzende Menge pro Zeiteinheit an zu reinigendem Wasser angepaßt werden.

Zur Reinigung der Filterflächen 6 wird über die Leitungen 11 – der Übersichtlichkeit halber ist in Fig. 1 nur eine Leitung 11 gezeichnet – Wasser den Anspritzvorrichtungen 12 zugeführt. Das Wasser spült bei sich drehender Kammer 5 von innen nach beiden Seiten die in den Filterflächen 6 sitzenden Teilchen nach außen. Dort wird von zwei der Anspritzvorrichtung 12 zugeordneten Absaugvorrichtungen 13 das Wasser mit den Schmutzteilchen mit Hilfe einer Pumpe 14 abgesaugt und an geeigneter Stelle in die Kläranlage eingeleitet.

Es ist möglich, alle seitlich an den scheibenförmigen Kammern 5 vorhandenen Filterflächen 6 gleichzeitig zu reinigen. Zweckmäßigerweise ist aber jeweils nur eine Anspritzvorrichtung 12 an die Wasserzufuhr angeschlossen, und lediglich zwei dazugehörige Absaugvorrichtungen 13 sind eingeschaltet. Das bedeutet, die an den scheibenförmigen Kammern 5 seitlich angebrachten Filterflächen 6 werden nacheinander, Kammer für Kammer, gereinigt. Das hat vor allem den Vorteil, daß kleine Wasserzuflußleitungen 15 und eine geringe Leistung der Schmutzwasserpumpe 14 erforderlich sind.

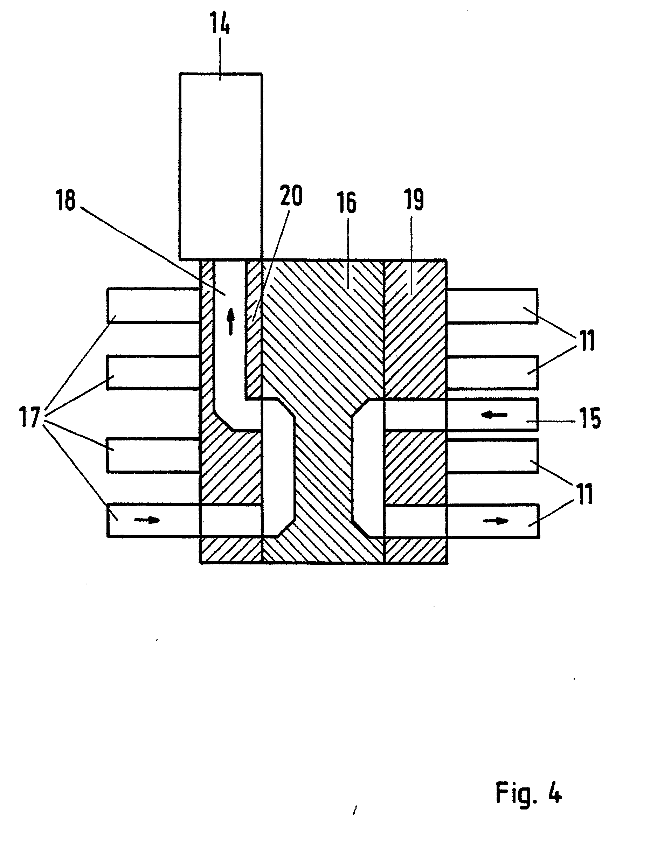

Zur Verwirklichung dieses Gedankens ist ein Verteilblock 16 vorhanden, der zwei revolverartige Systeme aufweist (siehe auch Fig. 4). Das eine System 19 ist an die Wasserzufuhr 15 angeschlossen, und je nach Stellung des Systems 19 ist eine der z.B. acht Leitungen 11 und damit eine Anspritzvorrichtung 12 mit Wasser versorgt. Das andere System 20 arbeitet entsprechend, was das Schmutzwasser anbelangt, weil je nach Stellung des Systems 20 jeweils eine zu zwei Absaugvorrichtungen 13 führende Leitung 17 an die Schmutzwasserleitung 18 angeschlossen ist.

Diese kammerweise Reinigung der Filterflächen 6 hat auch den Vorteil, daß je nach Verschmutzungsgrad der einzelnen Filterflächen 6 eine, mehrere oder alle scheibenförmigen Kammern 5 gereinigt werden können.

In Fig. 3 ist ein Teil der Vorrichtung gemäß der Erfindung vergrößert gezeichnet. Auf dem Tragrohr 7 sind scheibenförmige Kammern 5 – hier ist nur die obere Hälfte dargestellt – drehbar auf einem Gleitbelag 21 gelagert. In die eine Hälfte der Kammern 5 ragen Anspritzvorrichtungen 12, die im Bedarfsfall an die Wasserzufuhr (Leitungen 11) angeschlossen werden. Hier sind nur bei der linken Kammer 5 die beiden der Anspritzvorrichtung 12 zugeordneten Absaugvorrichtungen 13 gezeichnet. Jeweils zwei solcher Absaugvorrichtungen 13 sind, wie das neben der rechten Kammer 5 (im Schnitt und um 90 Grad gedreht) gezeigt ist, an einer Halterung 22 befestigt.

Die Filterflächen 6, die sektorartig an der Kammer 5 angeordnet sind (Fig. 2), stecken in Nuten 23 (Fig. 3). Außerdem sind sie an Stegen 24 befestigt (Fig. 2), die zwischen jedem Sektor der Filterfläche 6 vorgesehen sind. Am Umfang der Kammern 5 ist eine klammerartige Umfassung 25 vorhanden (Fig. 3), um alle Sektoren der Filterfläche 6 zusammenzuhalten. Unter den Filterflächen 6, die aus einem Tuch oder auch perforiertem Kunststoff bestehen, befinden sich gelochte Tragbleche 26.

## Patentansprüche

1. Vorrichtung zur mechanischen Reinigung biologisch behandelten Abwassers, die ein antreibbares Trommelfilter (2) mit scheibenartigen Kammern (5) enthält, welche an der Seite je zwei Filterflächen (6) auf ein Traggerüst aufweisen, wobei außerhalb der Kammern (5) dicht an die Filterflächen (6) zwei Absaugvorrichtungen (13) zur Reinigung der Filterschicht angreifen, dadurch gekennzeichnet, daß die Kammern (5) auf einem feststehenden Tragrohr (7) drehbar gelagert sind und daß im Innern der Kammern (5) zwei feststehende, den Absaugvorrichtungen (13) zugeordnete, mit Wasser beaufschlagbare Anspritzvorrichtungen (12) angeordnet sind.

2. Vorrichtung nach Anspruch 1, dadurch gekennzeichnet, daß die Anspritzvorrichtungen (12) über Leitungen (11) mit Wasser versorgt sind, die im Innern des Tragrohrs (7) verlegt sind.

3. Vorrichtung nach Anspruch 1 oder 2, dadurch gekennzeichnet, daß die Versorgungsleitungen (11) der Anspritzvorrichtungen (12) über ein revolverartiges System (19) eines Verteilblocks (16) mit der Wasserzufuhr (15) und daß die Absaugleitungen (17) der Absaugvorrichtungen (13) über ein zweites revolverartiges System (20) mit der Schmutzwasserleitung (18) koppelbar sind.

4. Vorrichtung nach Anspruch 1, dadurch gekennzeichnet, daß die Filterflächen (6) der scheibenartigen Kammern (5) in einzelne Sektoren aufgeteilt sind.

5. Vorrichtung nach Anspruch 4, dadurch gekennzeichnet, daß die sektorenartigen, die Filterfläche bildenden Elemente in Nuten (23) stecken, an Stegen (24) befestigt und mit einer klammerartigen Umfassung (25) versehen sind.

## Claims

1. Apparatus for the mechanical purification of biologically treated waste water, which includes a driveable drum filter (2) with disc-like chambers (5), which have two filter surfaces (6) on the side in each case, on a supporting frame, two suction-removal devices (13) outside the chambers (5) acting closely against the filter surfaces (6) for cleaning the filter layer, characterized in that the chambers (5) are rotatably mounted on a fixed supporting tube (7) and in that inside the chambers (5) are arranged two fixed spray devices (12), which are assigned to the suction-removal devices (13) and to which water can be admitted.

2. Apparatus according to Claim 1, characterized in that the spray devices (12) are supplied with water via lines (11), which are laid inside the supporting tube (7).

3. Apparatus according to Claim 1 or 2, characterized in that the supply lines (11) of the spray devices (12) can be coupled via a revolver-like system (19) of a distributing block (16) to the water supply (15) and in that the suction-removal lines (17) can be coupled via a second revolver-like system (20) to the waste water line (18).

4. Apparatus according to Claim 1, characterized in that the filter surfaces (6) of the disc-like chambers (5) are divided into individual sectors.

5. Apparatus according to Claim 4, characterized in that the sector-like elements forming the filter surface are inserted in grooves (23), are fixed on cross-pieces (24) and are provided with a clamp-like surround (25).

## Revendications

1. Dispositif d'épuration mécanique des eaux d'égouts traitées biologiquement, qui contient un filtre à tambour (2) pouvant être entraîné, muni de chambres en forme de disques (5), qui comportent latéralement respectivement deux surfaces filtrantes (6) montées sur une armature de support, deux dispositifs d'aspiration (13) servant à nettoyer la couche filtrante étant disposés directement contre les surfaces filtrantes (6), à l'extérieur des chambres (5), caractérisé en ce que les chambres (5) sont montées de manière à pouvoir tourner sur un tube de support fixe (7) et que deux dispositifs fixes de projection (12), associés aux dispositifs d'aspiration (13) et pouvant être chargés en eau, sont disposés à l'intérieur des chambres (5).

2. Dispositif suivant la revendication 1, caractérisé par le fait que les dispositifs de projection (12) sont alimentés en eau par l'intermédiaire de canalisations (11), qui sont disposées à l'intérieur du tube de support (7).

3. Dispositif suivant la revendication 1 ou 2, caractérisé par le fait que les canalisations d'alimentation (11) des dispositifs de projection (12) peuvent être accouplées à l'alimentation en eau (15) par l'intermédiaire d'un système à revolver (19) d'une unité de distribution (16) et que les canalisations d'aspiration (17) peuvent être accouplées à la canalisation d'eau sale (18) par l'intermédiaire d'un second système à revolver (20).

4. Dispositif suivant la revendication 1, caractérisé par le fait que les surfaces filtrantes (6) des chambres en forme de disques (5) sont subdivisées en des secteurs séparés.

5. Dispositif suivant la revendication 4, caractérisé par le fait que les éléments en forme de secteurs, qui constituent la surface filtrante, sont enfichés dans des gorges (23), sont fixés sur des barrettes (24) et sont équipés d'un élément enveloppant en forme de pince (25).

Fig. 1

Fig. 2
( A-B )

EP 0 178 584 B1

Fig. 3

Fig. 4